(19) Europäisches Patentamt
European Patent Office
Office européen des brevets

(11) EP 3 644 738 B1

(12) EUROPEAN PATENT SPECIFICATION

(45) Date of publication and mention of the grant of the patent:
**17.03.2021 Bulletin 2021/11**

(21) Application number: **18732811.7**

(22) Date of filing: **27.06.2018**

(51) Int Cl.:
***A01N 35/02*** *(2006.01)* ***A01P 1/00*** *(2006.01)*
***A01P 3/00*** *(2006.01)* ***A01N 31/04*** *(2006.01)*
***A01N 31/08*** *(2006.01)* ***A01N 39/00*** *(2006.01)*

(86) International application number:
**PCT/EP2018/067310**

(87) International publication number:
**WO 2019/002400 (03.01.2019 Gazette 2019/01)**

(54) **ANTIMICROBIAL MIXTURE CONTAINING 4-(3-ETHOXY-4-HYDROXYPHENYL)BUTAN-2-ONE AND AN AROMATIC ALCOHOL, AND COSMETIC COMPOSITION CONTAINING SAME**

ANTIMIKROBIELLES GEMISCH ENTHALTEND 4-(3-ETHOXY-4-HYDROXYPHENYL)BUTAN-2-ON UND EIN AROMATISCHES ALKOHOL, SOWIE KOSMETISCHE ZUSAMMENSETZUNGEN, DIE DIESES ENTHÄLT

MELANGE ANTIMICROBIEN CONTENANT DU 4-(3-ETHOXY-4-HYDROXYPHENYL)BUTAN-2-ONE ET UN ALCOOL AROMATIQUE, ET COMPOSITION COSMETIQUE LE CONTENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2017 FR 1756156**
**30.06.2017 FR 1756166**
**18.08.2017 FR 1757741**
**18.08.2017 FR 1757743**

(43) Date of publication of application:
**06.05.2020 Bulletin 2020/19**

(73) Proprietor: **L'Oreal**
**75008 Paris (FR)**

(72) Inventors:
- **MENARD-SZCZEBARA, Florence**
**94152 Chevilly La Rue (FR)**
- **CUPFERMAN, Sylvie**
**94152 Chevilly La Rue (FR)**
- **GALVAN, Julien**
**94152 Chevilly La Rue (FR)**

(74) Representative: **Rivière, François Armand**
**L'Oréal**
**Service DIPI**
**9 Rue Pierre Dreyfus**
**92110 Clichy (FR)**

(56) References cited:
**WO-A1-2011/039445**
**US-A1- 2004 059 005**
**US-A1- 2009 004 120**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 644 738 B1

## Description

The subject of the present invention is an antibacterial mixture containing 4-(3-ethoxy-4-hydroxyphenyl)butan-2-one and an aromatic alcohol, and also a cosmetic composition containing such a mixture.

4-(3-Ethoxy-4-hydroxyphenyl)butan-2-one (ketone compound) is a useful substance as a preserving agent for cosmetic compositions, for protecting the compositions against microbial contamination, as described in patent application WO 2011/039445.

However, it is desirable to be able to incorporate said ketone compound in reduced concentration in compositions, especially cosmetic or dermatological compositions, while at the same time maintaining good antimicrobial conservation performance. Combinations of the ketone compound with other compounds that have antimicrobial efficacy are thus sought for this purpose.

The inventors have discovered, unexpectedly, that the combination of 4-(3-ethoxy-4-hydroxyphenyl)butan-2-one with an aromatic alcohol chosen from a phenoxyalcohol such as 2-phenoxyalcohol, phenylethyl alcohol and benzyl alcohol makes it possible to obtain an antimicrobial mixture which has synergistic antimicrobial activity.

The results of the examples described below show the synergistic antimicrobial activity obtained with the minimum inhibitory concentration (MIC) measurements taken with several mixtures. The antimicrobial activity is considered as being synergistic when the antimicrobial mixture makes it possible to obtain a percentage of strain growth of less than or equal to 20%, or even less than or equal to 25%.

The combination of 4-(3-ethoxy-4- hydroxyphenyl)butan-2-one with a phenoxyalcohol such as 2-phenoxyethanol makes it possible to obtain an antimicrobial mixture which has synergistic antimicrobial activity, in particular on moulds, in particular on *Aspergillus niger,* on gram-positive bacteria, in particular on *Enterococcus faecalis and Staphylococcus aureus*, on gram -negative bacteria, in particular on *Pseudomonas aeruginosa,* and on yeasts, in particular on *Candida albicans.*

Application FR-A-2962333 describes a cosmetic composition for the treatment of oily skin comprising a 2-alkoxy-4-alkyl ketone phenol and an essential oil. The composition may comprise an additional active agent for oily skin care, such as antimicrobial agents, among which mention is made of phenoxyethanol. This document does not specifically describe an antimicrobial mixture constituted of the combination of 4-(3-ethoxy-4- hydroxyphenyl)butan-2-one with phenoxyethanol, and also does not suggest that such a mixture has a synergistic antimicrobial activity on moulds, in particular on *Aspergillus niger,* on gram-positive bacteria, in particular on *Enterococcus faecalis and Staphylococcus aureus*, on gram -negative bacteria, in particular on *Pseudomonas aeruginosa,* and on yeasts, in particular on *Candida albicans.*

The combination of 4-(3-ethoxy-4-hydroxyphenyl)butan-2-one with the phenylethyl alcohol makes it possible to obtain an antimicrobial mixture with synergistic antimicrobial activity, in particular on yeasts, in particular on *Candida albicans.*

The combination of 4-(3-ethoxy-4-hydroxyphenyl)butan-2-one with benzyl alcohol makes it possible to obtain an antimicrobial mixture which has synergistic antimicrobial activity, in particular on moulds, in particular on *Aspergillus niger,* and on gram-positive bacteria, in particular on *Enterococcus faecalis.*

The combination of 4-(3-ethoxy-4-hydroxyphenyl)butan-2-one with a cresol compound, in particular 4-isopropyl-3-methylphenol, makes it possible to obtain an antimicrobial mixture which has synergistic antimicrobial activity, in particular on gram-positive in particular on *Enterococcus faecalis,* and on yeasts, in particular on *Candida albicans.*

A subject of the invention is an antimicrobial mixture comprising, or constituted of, 4-(3-ethoxy-4-hydroxyphenyl)butan-2-one and an aromatic alcohol chosen from:

i) a phenoxyalcohol of formula $C_6H_5$-O-R-OH, R denoting a divalent hydrocarbon-based radical having 2 or 3 carbon atoms;

ii) phenylethyl alcohol;

ii) benzyl alcohol;

iv) a cresol compound of formula (I):

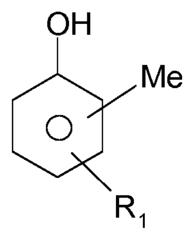

(I)

in which $R_1$ denotes H or an isopropyl radical.

A subject of the invention is also a composition, especially a cosmetic or dermatological composition, comprising, in a physiologically acceptable medium, said mixture described previously.

A further subject of the invention is a process for the non-therapeutic cosmetic treatment of keratin materials, comprising the application to the keratin materials of a composition as described previously. The process may be a cosmetic process for caring for or making up or cleansing keratin materials.

A subject of the invention is also a process for conserving a composition comprising a physiologically acceptable medium, in particular a cosmetic or dermatological composition, characterized in that it consists in incorporating into said composition an antimicrobial mixture as described previously.

A subject of the invention is also the use of the antimicrobial mixture described previously for conserving a composition comprising a physiologically acceptable medium.

4-(3-Ethoxy-4-hydroxyphenyl) butan-2-one is a compound of formula:

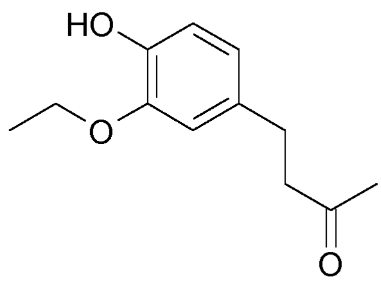

According to a first embodiment, a subject of the invention is an antimicrobial mixture comprising, or constituted of, 4-(3-ethoxy-4-hydroxyphenyl)butan-2-one and a phenoxyalcohol of formula $C_6H_5$-O-R-OH, R denoting a divalent hydrocarbon-based radical having 2 or 3 carbon atoms.

The phenoxyalcohol described previously can be chosen from 2-phenoxyethanol or 1-phenoxy-2-propanol. 2-Phenoxyethanol is preferably used.

2-Phenoxyethanol corresponds to the compound of formula $C_6H_5$-O-$CH_2$-$CH_2$-OH (CAS No.: 122-99-6).

Advantageously, 4-(3-ethoxy-4-hydroxyphenyl)butan-2-one and the phenoxyalcohol previously described are present in said mixture in a content such that the 4-(3-ethoxy-4-hydroxyphenyl)butan-2-one/phenoxyalcohol weight ratio ranges from 0.15 to 3.5, preferably ranges from 0.15 to 3.2, and more preferentially ranges from 0.2 to 3.2.

The antimicrobial mixture may have a 4-(3-ethoxy-4-hydroxyphenyl)butan-2-one/phenoxyalcohol weight ratio ranging from 0.6 to 1.6, preferably ranging from 0.7 to 1.4, preferentially ranging from 0.8 to 1.2 and more preferentially ranging from 0.9 to 1.1. Such a mixture has good antimicrobial activity on moulds, especially on *Aspergillus niger.*

The antimicrobial mixture may have a 4-(3-ethoxy-4-hydroxyphenyl)butan-2-one/phenoxyalcohol weight ratio ranging from 0.4 to 0.8, preferably ranging from 0.45 to 0.7 and more preferentially ranging from 0.45 to 0.6. Such a mixture has good antimicrobial activity on the gram-positive bacterium *Enterococcus faecalis.*

The antimicrobial mixture may have a 4-(3-ethoxy-4-hydroxyphenyl)butan-2-one/phenoxyalcohol weight ratio ranging from 0.3 to 3.2, preferably ranging from 0.3 to 2.4, preferably ranging from 0.3 to 1.4 and more preferentially ranging from 0.3 to 1.2. Such a mixture has good antimicrobial activity on the gram-positive bacterium *Staphylococcus aureus.*

The antimicrobial mixture may have a 4-(3-ethoxy-4-hydroxyphenyl)butan-2-one/phenoxyalcohol weight ratio ranging from 0.2 to 3.2, preferably ranging from 0.4 to 3.2, preferably ranging from 0.8 to 3.2, preferably ranging from 1.6 to 3.2, preferably ranging from 0.2 to 2.4, preferably ranging from 0.4 to 2.4, preferentially ranging from 0.8 to 2.4 and more preferentially ranging from 1.6 to 2.4. Such a mixture has good antimicrobial activity on gram-negative bacteria, especially on *Pseudomonas aeruginosa.*

The antimicrobial mixture may have a 4-(3-ethoxy-4-hydroxyphenyl)butan-2-one/phenoxyalcohol weight ratio ranging from 0.15 to 1.3, preferably ranging from 0.15 to 0.7 and preferentially ranging from 0.25 to 0.5. Such a mixture

has good antimicrobial activity on yeasts, in particular on *Candida albicans.*

According to a second embodiment, a subject of the invention is an antimicrobial mixture comprising, or constituted of, 4-(3-ethoxy-4-hydroxyphenyl)butan-2-one and phenylethyl alcohol.

The phenylethyl alcohol corresponds to the compound 2-phenylethyl alcool (CAS No.: 60-12-8) of formula:

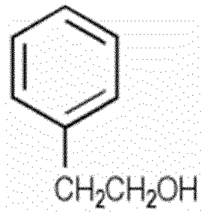

Advantageously, 4-(3-ethoxy-4-hydroxyphenyl)butan-2-one and the phenylethyl alcohol are present in said mixture in a content such that the 4-(3-ethoxy-4-hydroxyphenyl)butan-2-one/phenylethyl alcohol weight ratio ranges from 0.05 to 1, preferably ranging from 0.09 to 0.9 and preferentially ranging from 0.3 to 0.85.

According to a third embodiment, a subject of the invention is an antimicrobial mixture comprising, or constituted of, 4-(3-ethoxy-4-hydroxyphenyl)butan-2-one and benzyl alcohol.

Benzyl alcohol (CAS No.: 100-51-6) corresponds to the compound of formula:

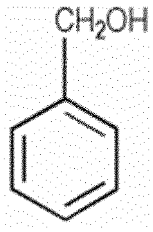

Advantageously, 4-(3-ethoxy-4-hydroxyphenyl)butan-2-one and the benzyl alcohol are present in said mixture in a content such that the 4-(3-ethoxy-4-hydroxyphenyl)butan-2-one/benzyl alcohol weight ratio ranges from 0.1 to 1.5, and preferably ranges from 0.1 to 1.2.

The antimicrobial mixture according to the invention has synergistic antimicrobial activity, in particular on moulds, especially on *Aspergillus niger,* and on gram-positive bacteria, in particular on *Enterococcus faecalis.*

The antimicrobial mixture may have a 4-(3-ethoxy-4-hydroxyphenyl)butan-2-one/benzyl alcohol weight ratio ranging from 0.15 to 0.8, preferably ranging from 0.2 to 0.6. Such a mixture has good antimicrobial activity on moulds, especially on *Aspergillus niger*.

The antimicrobial mixture may have a 4-(3-ethoxy-4-hydroxyphenyl)butan-2-one/benzyl alcohol weight ratio ranging from 0.1 to 1.5, preferably ranging from 0.1 to 1.2. Such a mixture has good antimicrobial activity on the gram-positive bacterium *Enterococcus faecalis.*

According to a fourth embodiment, a subject of the invention is an antimicrobial mixture comprising, or constituted of, 4-(3-ethoxy-4-hydroxyphenyl)butan-2-one a cresol compound defined below.

The cresol compound used according to the invention is a compound of formula (I):

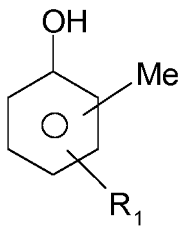 (I)

in which $R_1$ denotes H or an isopropyl radical.

The compound of formula (I) may be chosen from 3-methylphenol (CAS number 108-39-4), 2-methylphenol (CAS number 95-48-7), 4-methylphenol (CAS number 106-44-5) and 4-isopropyl-3-methylphenol (CAS number 3228-02-2). Preferably, the compound of formula (I) is 4-isopropyl-3-methylphenol.

Advantageously, 4-(3-ethoxy-4-hydroxyphenyl)butan-2-one and the cresol compound of formula (I) are present

in said mixture in a content such that the 4-(3-ethoxy-4-hydroxyphenyl)butan-2-one/compound (I) weight ratio ranges from 0.5 to 15, preferably ranges from 1 to 15 and more preferentially ranges from 1 to 12.

Preferentially, the antimicrobial mixture according to the invention contains 4-isopropyl-3-methylphenol.

The antimicrobial mixture may have a 4-(3-ethoxy-4-hydroxyphenyl)butan-2-one/cresol compound (I) (in particular 4-isopropyl-3-methylphenol) ranging from 2 to 15, preferably ranging from 2.2 to 15 and more preferentially ranging from 2.2 to 12. Such a mixture has good antimicrobial activity on the gram-positive bacterium *Enterococcus faecalis.*

The antimicrobial mixture may have a 4-(3-ethoxy-4-hydroxyphenyl)butan-2-one/cresol compound (I) (in particular 4-isopropyl-3-methylphenol) ranging from 0.5 to 15, preferably ranging from 1 to 15, preferably ranging from 1 to 12, and more preferentially ranging from 2 to 8. Such a mixture has good antimicrobial activity on yeasts, in particular on *Candida albicans.*

A subject of the invention is also a composition comprising, in a physiologically acceptable medium, the antimicrobial mixture described previously.

The term "physiologically acceptable medium" is intended to mean a medium that is compatible with human keratin materials such as the skin, the scalp, the hair and the nails. Said medium may comprise one or more additional ingredients, different from the ketone compound and from the 2-phenoxyethanol and/or from the phenylethyl alcohol and/or from the benzyl alcohol and/or from the cresol compound of formula (I).

The compound 4-(3-ethoxy-4-hydroxyphenyl)butan-2-one may be present in the composition according to the invention in a content ranging from 0.01% to 5% by weight relative to the total weight of the composition, preferably ranging from 0.01% to 3% by weight, preferentially ranging from 0.01% to 2.5% by weight and more preferentially ranging from 0.01% to 2% by weight.

The composition may comprise at least one additional ingredient chosen from water, oils, polyols containing from 2 to 10 carbon atoms, gelling agents, surfactants, film-forming polymers, colorants, fragrances, fillers, UV-screening agents, plant extracts, cosmetic and dermatological active agents, and salts.

The composition according to the invention may comprise an aqueous phase.

The composition may comprise water, which may be present at a content ranging from 5% to 90% by weight relative to the total weight of the composition, and preferably ranging from 35% to 75% by weight.

The composition may also comprise a polyol that is water-miscible at ambient temperature (25°C), especially chosen from polyols especially containing from 2 to 10 carbon atoms, preferably containing from 2 to 6 carbon atoms, such as glycerol, propylene glycol, 1,3-propanediol, butylene glycol, pentylene glycol, hexylene glycol, dipropylene glycol, diethylene glycol or diglycerol. Advantageously, the composition according to the invention comprises 1,3-propanediol, in particular in a content ranging from 0.1% to 20% by weight and preferably ranging from 0.1% to 10% by weight, preferentially ranging from 0.5% to 5% by weight, relative to the total weight of the composition.

The compositions according to the invention may be in the form of oil-in-water (O/W) emulsions, water-in-oil (W/O) emulsions or multiple emulsions (triple: W/O/W or O/W/O), oily solutions, oily gels, aqueous solutions, aqueous gels, or solid compositions. These compositions are prepared according to the usual methods.

The compositions according to the invention may be more or less fluid and may have the appearance of a white or coloured cream, an ointment, a milk, a lotion, a serum, a paste or a foam. They may be optionally applied to the skin in aerosol form. They may also be in solid form, for example in the form of a stick or a compact powder.

The composition according to the invention may especially be in the form of:

- a makeup product, especially for making up the skin of the face, the body, or the lips or the eyelashes;
- an aftershave gel or lotion; a shaving product;
- a deodorant (stick, roll-on or aerosol);
- a hair-removing cream;
- a body hygiene composition such as a shower gel or a shampoo;
- a pharmaceutical composition;
- a solid composition such as a soap or a cleansing bar;
- an aerosol composition also comprising a pressurized propellant;
- a hairsetting lotion, a hair-styling cream or gel, a dye composition, a permanent-waving composition, a lotion or a gel for combating hair loss, or a hair conditioner;

- a composition for caring for or cleansing the skin.

A subject of the invention is also a process for preparing a composition, especially a cosmetic or dermatological composition, comprising a step of mixing 4-(3-ethoxy-4-hydroxyphenyl)butan-2-one, the aromatic alcohol described previously and one or more additional ingredients, in particular cosmetic or dermatological ingredients, such as those described previously.
The invention is illustrated in greater detail in the example that follows. The amounts of the ingredients are expressed as weight percentages.

## Example 1: Determination of the synergistic antimicrobial activity as MIC

The demonstration of a synergistic antimicrobial activity effect with a mixture of 4-(3-ethoxy-4-hydroxyphenyl)butan-2-one (referred to as substance A) and of aromatic alcohol (referred to as substance B) is performed by calculating the synergy index (or FIC index) according to the following formula:

$$\text{FIC Index} = (\text{MIC of A with B} / \text{MIC of A}) + (\text{MIC of B with A} / \text{MIC of B})$$

with:

- MIC of A with B: minimum concentration of product A in the combination A + B which makes it possible to obtain an inhibitory effect;

- MIC of B with A: minimum concentration of product B in the combination A + B which makes it possible to obtain an inhibitory effect;

- MIC of A: minimum inhibitory concentration of product A alone;

- MIC of B: minimum inhibitory concentration of product B alone.

This formula was described for the first time in the article by F.C. Kull, P.C. Eisman, H.D. Sylwestrowka, and R.L. Mayer, Applied Microbiology 9:538-541, 1961.
For each compound tested alone, the MIC is considered as the first concentration which makes it possible to obtain a microbial growth percentage of less than or equal to 20%.
As regards the combinations tested, MIC of A with B and MIC of B with A are the respective concentrations of A and of B in the combinations which make it possible to obtain a microbial growth percentage of less than or equal to 20%.

### Interpretation of the FIC Index:

When the FIC index value is less than or equal to 1, it is considered that the combination of test compounds has a synergistic effect.
The results obtained are summarized in the following tables.
The combination of compounds A and B was tested on the following strains or a part thereof: *Aspergillus niger, Enterococcus faecalis, Staphylococcus aureus, Pseudomonas aeruginosa, Candida albicans.*
The microbial strain *Aspergillus niger* ATCC 6275, and a double-concentration Sabouraud broth liquid culture medium supplemented with polyoxyethylenated (20 OE) sorbitan monopalmitate (Tween 40 from Croda) and Phytagel© BioReagent were used (i.e. a mixture of 5 g of Phytagel + 0.6 g Tween 40 + 60 g of Sabouraud broth).
The microbial strain *Enterococcus faecalis* ATCC 33186 and a double-concentration BHI (Brain Heart Infusion) broth liquid culture medium were used.
The microbial strain *Staphylococcus aureus* ATCC 6538 and a double-concentration nutrient broth liquid culture medium were used.
The microbial strain *Pseudomonas aeruginosa* ATCC 9027 and a double-concentration nutrient broth liquid culture medium were used.
The microbial strain *Candida albicans* ATCC 10231 and a double-concentration Sabouraud broth liquid culture medium were used.
A 96-well microplate and an incubation temprature of 32.5°C are used.
The incubation time of the microplate is:

- from 18 to 24 h under aerobic conditions for *Candida albicans* ATCC 10231, *Pseudomonas aeruginosa* ATCC 9027 and *Staphylococcus aureus* ATCC 6538;
- from 24 to 30 h under aerobic conditions for microbial *Aspergillus niger* ATCC 6275;
- from 24 to 48 h under aerobic conditions for *Enterococcus faecalis* ATCC 33186.

**Tests**

For each compound:

A = 4-(3-ethoxy-4-hydroxyphenyl) butan-2-one compound

B = aromatic alcohol compound

A 10% (weight/volume) stock solution was prepared by mixing 1 g of compound in 9 ml of aqueous 1‰ agar solution. Successive dilutions were made with the 1‰ agar solution.

**Tests of compounds A and B alone**

50 µl of each of the daughter solutions obtained containing compound A or B are added to the microplate wells. 100 µl of Sabouraud liquid nutrient broth inoculated at double concentration with the *Aspergillus niger* strain and 50 µl of aqueous 1‰ agar solution are also added thereto.

**Tests of compounds A and B as a mixture**

50 µl of each of the daughter solutions obtained containing compound A and 50 µl of each of the daughter solutions obtained containing compound B are added to the microplate wells. 100 µl of Sabouraud liquid nutrient broth inoculated at double concentration with the strain *Aspergillus niger* are also added thereto.

**Microbial growth control**

A positive microbial growth control was also prepared. The positive microbial growth control corresponds to a mixture of 100 µl of aqueous 1‰ agar solution with 100 µl of Sabouraud liquid nutrient broth inoculated at double concentration with the strain *Aspergillus niger* in the absence of compounds A and B.

**Absorbance control for compounds A and B alone**

An absorbance control was performed in parallel on compounds A and B alone. This control corresponds to 100 µl of double concentration sterile Sabouraud liquid nutrient broth + 100 µl of double concentration compound A or B.

In the three cases (absorbance control, growth control and test), the final volume present in each of the microplate wells is 200 µl.

In the two cases (test and control), the inoculum represents the concentration of the *Aspergillus niger* strain present in the final volume of the wells (200 µl) and is between 2 and $6 \times 10^5$ cfu/ml of *Aspergillus niger.*

The minimum inhibitory concentration (MIC) of each compound A and B alone and in combination was determined in a known manner by means of optical density measurements at a wavelength of 620 nm.

The test as described above (tests, absorbance control and growth control) was performed again to test the combination A + B on the following strains *Enterococcus faecalis, Staphylococcus aureus, Pseudomonas aeruginosa, Candida albicans.*

The following results were obtained with compound B1 = 2-phenoxyethanol:

***Aspergillus niger***

| **Concentrations tested (in weight %)** | 0 A | 0.0625 A | 0.125 A | **0.25 A** |
|---|---|---|---|---|
| 0 B1 | | 85 | 47 | 7 |
| 0.0625 B1 | 95 | 76 | 37 | 5 |
| 0.125 B1 | 89 | 34 | **14** (FIC 1) | 2 |
| **0.25 B1** | 8 | 3 | 2 | 2 |

| **% MIC of A alone** | **% MIC of B1 alone** | **MIC of each compound as a mixture** | | **FIC Index** | **Ratio A/B1** |
|---|---|---|---|---|---|
| | | A % | B1 % | | |
| 0.25 | 0.25 | 0.125 | 0.125 | 1 | 1 |

The results obtained show synergistic inhibitory activity for the mixture: 0.125% of A and 0.125% of B1, i.e. ratio A/B1 = 1

***Enterococcus faecalis***

| **Concentrations tested (in weight %)** | 0 A | 0.0625 A | 0.125 A | 0.25 A | 0.5 A | **1 A** |
|---|---|---|---|---|---|---|
| 0 B1 | | 82 | 89 | 89 | 75 | 13 |
| 0.0625 B1 | 87 | 83 | 87 | 97 | 82 | 34 |
| 0.125 B1 | 86 | 90 | 80 | 95 | 73 | 30 |
| 0.25 B1 | 84 | 95 | 75 | 83 | 74 | 30 |
| 0.5 B1 | 80 | 79 | 68 | **5 (FIC 0.75)** | 37 | 2 |
| **1 B1** | 6 | 6 | 2 | 3 | 2 | -23 |

| % MIC of A alone | % MIC of B1 alone | MIC of each compound as a mixture | | FIC Index | Ratio A/B1 |
|---|---|---|---|---|---|
| | | A % | B1 % | | |
| 1 | 1 | 0.25 | 0.5 | 0.75 | 0.5 |

The results obtained show synergistic inhibitory activity for the mixture: 0.25% of A and 0.5% of B1, i.e. ratio A/B1 = 0.5

***Staphylococcus aureus***

| **Concentrations tested (in weight %)** | 0 A | 0.0625 A | 0.125 A | 0.25 A | **0.5 A** |
|---|---|---|---|---|---|
| 0 B1 | | 71 | 57 | 52 | 1 |
| 0.0625 B1 | 66 | 68 | 62 | 38 | 1 |
| 0.125 B1 | 73 | 65 | 55 | **17 (FIC 2)** | 1 |
| 0.25 B1 | 58 | 43 | **15 (FIC 0.5)** | **1 (FIC 1)** | 0 |
| **0.5 B1** | 1 | 1 | 0 | 1 | 0 |

| % MIC of A alone | % MIC of B1 alone | MIC of each compound as a mixture | | FIC Index | Ratio A/B1 |
|---|---|---|---|---|---|
| | | A % | B1 % | | |
| 0.5 | 0.5 | 0.25 | 0.25 | 1 | 0.5 |

The results obtained show synergistic inhibitory activity for the mixtures:

i) 0.25% of A and 0.125% of B1, i.e. ratio A/B1 = 2

ii) 0.125% of A and 0.25% of B1, i.e. ratio A/B1 = 0.5

iii) 0.25% of A and 0.25% of B1, i.e. ratio A/B1 = 1

***Pseudomonas aeruginosa***

| **Concentrations tested (in weight %)** | 0 A | 0.0625 A | 0.125 A | 0.25 A | 0.5 A | **1 A** |
|---|---|---|---|---|---|---|
| 0 B1 | | 49 | 82 | 116 | 67 | -4 |
| 0.0625 B1 | 45 | 86 | 118 | 92 | 87 | 27 |
| 0.125 B1 | 39 | 89 | 82 | 95 | 78 | 16 |
| 0.25 B1 | 39 | **16 (FIC 0.25)** | **14 (FIC 0.5)** | **10 (FIC 1)** | **0 (FIC 2)** | 20 |
| **0.5 B1** | 0 | 0 | 0 | 0 | 0 | 65 |
| 1 B1 | 0 | 0 | 0 | 0 | 0 | 14 |

| **% MIC of A alone** | **% MIC of B1 alone** | **MIC of each compound as a mixture** | | **FIC Index** | **Ratio A/B1** |
|---|---|---|---|---|---|
| | | A % | B1 % | | |
| 1 | 0.5 | 0.5 | 0.25 | 1 | 0.25 |

The results obtained show synergistic inhibitory activity for the mixtures:

i) 0.0625% of A and 0.25% of B1, i.e. ratio A/B1 = 0.25

ii) 0.125% of A and 0.25% of B1, i.e. ratio A/B1 = 0.5

iii) 0.25% of A and 0.25% of B1, i.e. ratio A/B1 = 1

iv) 0.5% of A and 0.25% of B1, i.e. ratio A/B1 = 2

***Candida Albicans***

| **Concentrations tested (in weight %)** | 0 A | 0.025 A | 0.05 A | **0.1 A** |
|---|---|---|---|---|
| 0 B1 | | 48 | 29 | 16 |
| 0.0625 B1 | 44 | 26 | **17 (FIC 0.75)** | 8 |
| 0.125 B1 | 22 | **10 (FIC 0.75)** | **5 (FIC 1)** | 1 |
| **0.25 B1** | 2 | 1 | 1 | 1 |

| % MIC of A alone | % MIC of B1 alone | MIC of each compound as a mixture | | FIC Index | Ratio A/B1 |
|---|---|---|---|---|---|
| | | A % | B1 % | | |
| 0.1 | 0.25 | 0.05 | 0.125 | 0.75 | 0.2 |

The results obtained show synergistic inhibitory activity for the mixtures:

i) 0.05% of A and 0.0625% of B1, i.e. ratio A/B1 = 0.8

ii) 0.05% of A and 0.125% of B1, i.e. ratio A/B1 = 0.4

iii) 0.025% of A and 0.125% of B1, i.e. ratio A/B1 = 0.2

**Example 2: determination of the antimicrobial activity of the antimicrobial mixture**

The antimicrobial efficacy of the 4-(3-ethoxy-4-hydroxyphenyl)butan-2-one + 2-phenoxyethanol antimicrobial mixture (respective weight ratio of 0.1) was evaluated by the Challenge Test method.

Protocol

The method of the challenge test is constituted of an artificial contamination of the sample with microbial strains from collection (bacteria, yeasts and moulds) and of an evaluation of the number of revivable microorganisms seven days after inoculation.

In order to demonstrate the effect of the antimicrobial mixture, the antimicrobial activity of a cosmetic formula containing 0.05% of 4-(3-ethoxy-4-hydroxyphenyl)butan-2-one and 0.5% of 2-phenoxyethanol was compared with the same formula alone (control), after inoculation with about $10^6$ cfu (colony-forming units)/gram of cosmetic formulation.

Cosmetic formula

A facial care oil-in-water emulsion having the following composition was prepared (contents in weight percentages):

| | |
|---|---|
| Sorbitan tristearate (Span 65 V from Croda) | 0.9% |
| Glyceryl mono/distearate (36/64)/potassium stearate mixture (Tegin Pellets from Goldschmidt) | 3% |
| Polyethylene glycol stearate (40 ethylene oxide units) | 2% |
| **4-(3-ethoxy-4-hydroxyphenyl)butan-2-one** | **0.05%** |
| **2-Phenoxyethanol** | **0.5%** |
| Propane-1,3-diol | 2% |

(continued)

| | |
|---|---|
| Mineral oil, microcrystalline wax and paraffin mixture (Vaseline Blanche Codex 236 from Aiglon) | 4% |
| Liquid fraction of shea butter (Shea Olein from Olvea) | 1% |
| Cyclopentadimethylsiloxane | 5% |
| Cetyl alcohol | 4% |
| Apricot kernel oil | 0.3% |
| Hydrogenated polyisobutene (Parleam from NOF Corporation) | 7.2% |
| Myristyl myristate | 2% |
| Stearic acid | 1.2% |
| Caffeine | 0.1% |
| Citric acid | 0.2% |
| Glycerol | 3% |
| Sodium hydroxide | 0.05% |
| Water qs | 100% |

Control formula A: Formulation similar to the preceding one containing 0.05% of 4-(3-ethoxy-4-hydroxyphenyl)butan-2-one and without 2-phenoxyethanol (0.5% compensated with water).

Control formula B: Similar formulation containing 0.5% of 2-phenoxyethanol and without 4-(3-ethoxy-4-hydroxyphenyl)butan-2-one (0.05% compensated with water).

Microorganism cultures

5 pure cultures of microorganisms were used.

| MICROORGANISMS | Subculturing medium | T° | ATCC |
|---|---|---|---|
| *Escherichia coli* (Ec) | Trypto-casein soya | 35°C | 8739 |
| *Enterococcus faecalis* (Ef) | Trypto-casein soya | 35°C | 33186 |
| *Pseudomonas aeruginosa* (Pa) | Trypto-casein soya | 35°C | 19429 |
| *Candida albicans* (Ca) | Sabouraud | 35°C | 10231 |
| *Aspergillus niger* (An) | Malt | 35°C | 6275 |
| ATCC = American Type Culture Collection | | | |

The strains of gram-negative bacteria (*Escherichia coli* and *Pseudomonas aeruginosa*), gram-positive bacterium (*Enterococcus faecalis*), yeast (*Candida albicans*), and mould (*Aspergillus niger*) are inoculated into subculturing medium, respectively the day before inoculation for the bacteria and the yeast, and 5 days before inoculation for the mould.

On the day of inoculation:

- a suspension in tryptone salt diluent is prepared, respectively, for the bacteria and the yeast, so as to obtain by spectrophotometer a suspension with an optical density of between 35% and 45% of transmitted light at 544 nm;
- for the mould, the spores are collected by washing the agar with 6 to 7 ml of harvesting solution and the suspension is recovered in a sterile tube or flask.

After homogenizing the microbial suspension, 0.2 ml of inoculum is introduced into each pill bottle (the suspensions are used pure: between $1\times10^8$ and $3\times10^8$ cfu per ml) and the microbial suspension in the 20 g of product (= cosmetic formulation) is homogenized thoroughly using a spatula.

The content of microorganisms present in the product corresponds after homogenization to a concentration of $10^6$ microorganisms per gram of product, i.e. inoculation to 1% of an inoculum containing $10^8$ microorganisms per ml.

After 7 days of contact time between the microorganisms and the product at 22°C $\pm$ 2°C and in the dark, tenfold dilutions are carried out and the number of revivable microorganisms remaining in the product is counted.

Results

| | No. of CFU/gram of product at T7 days | | | | |
|---|---|---|---|---|---|
| | *E.coli* | *P. aeruginosa* | *E. faecalis* | *C. albicans* | *A. niger* |
| Antimicrobial mixture | <200 | <200 | <200 | <200 | <200 |
| <200 CFU: sensitivity threshold of the method | | | | | |

**Example 3: determination of the synergistic antimicrobial activity in MIC on the microbial strain *Candida albicans***

The demonstration of a synergistic antimicrobial activity effect with a mixture of 4-(3-ethoxy-4-hydroxyphenyl)butan-2-one (referred to as substance A) and of phenylethyl alcohol (referred to as substance B2) is performed according to the conditions described in Example 1.

The following results were obtained:

| concentrations tested (in weight %) | 0 A | 0.025 A | 0.05 A | 0.1 A | **0.2 A** |
|---|---|---|---|---|---|
| 0 B2 | | 85 | 64 | 25 | 3 |
| 0.125 B2 | 41 | 23 | **14** | **7** | 0 |
| | | | **(FIC 0.75)** | **(FIC 1)** | |
| **0.25 B2** | 7 | 2 | 1 | 0 | 0 |

| % MIC A | MIC B2 | MIC of each compound as a mixture | | FIC Index | |
|---|---|---|---|---|---|
| | | A % | B2 % | | |
| 0.2 | 0.25 | 0.05 | 0.125 | 0.75 | Ratio A/B2 = 0.4 |

The results obtained show synergistic inhibitory activity for the mixtures:

i) 0.025% of A and 0.125% of B2, i.e. ratio A/B2 = 0.2

ii) 0.05% of A and 0.125% of B2, i.e. ratio A/B2 = 0.4

iii) 0.1% of A and 0.125% of B2, i.e. ratio A/B2 = 0.8

**Example 4: determination of the antimicrobial activity of the antimicrobial mixture**

The antimicrobial efficacy of the 4-(3-ethoxy-4-hydroxyphenyl)butan-2-one + 2-phenylethyl alcohol antimicrobial mixture (respective weight ratio of 0.1) was evaluated by the Challenge Test method according to the protocol described in Example 2.

Cosmetic formula

A facial care oil-in-water emulsion having the following composition was prepared (contents in weight percentages):

| | |
|---|---|
| Sorbitan tristearate (Span 65 V from Croda) | 0.9% |
| Glyceryl mono/distearate (36/64)/potassium stearate mixture (Tegin Pellets from Goldschmidt) | 3% |
| Polyethylene glycol stearate (40 ethylene oxide units) | 2% |
| **4-(3-ethoxy-4-hydroxyphenyl)butan-2-one** | **0.05%** |
| **Phenylethyl alcohol** | **0.5%** |
| Propane-1,3-diol | 2% |
| Mineral oil, microcrystalline wax and paraffin mixture (Vaseline Blanche Codex 236 from Aiglon) | 4% |
| Liquid fraction of shea butter (Shea Olein from Olvea) | 1% |
| Cyclopentadimethylsiloxane | 5% |
| Cetyl alcohol | 4% |
| Apricot kernel oil | 0.3% |
| Hydrogenated polyisobutene (Parleam from NOF Corporation) | 7.2% |
| Myristyl myristate | 2% |
| Stearic acid | 1.2% |
| Caffeine | 0.1% |
| Citric acid | 0.2% |
| Glycerol | 3% |
| Sodium hydroxide | 0.05% |
| Water qs | 100% |

Results

| | No. of CFU/gram of product at T7 days | | | | |
|---|---|---|---|---|---|
| | *E.coli* | *P. aeruginosa* | *E. faecalis* | *C. albicans* | *A. niger* |
| Antimicrobial mixture | <200 | <200 | <200 | <200 | <200 |
| <200 CFU: sensitivity threshold of the method | | | | | |

**Example 5: determination of the synergistic antimicrobial activity as MIC**

The demonstration of a synergistic antimicrobial activity effect with a mixture of 4-(3-ethoxy-4-hydroxyphenyl)butan-2-one (referred to as substance A) and of benzyl alcohol (referred to as substance B3) is performed according to the conditions described in Example 1.

The following results were obtained:

Aspergillus niger

| concentrations tested (in weight %) | 0 A | 0.0625 A | 0.125 A | **0.25 A** |
|---|---|---|---|---|
| 0 B3 | | 86 | 41 | 6 |
| 0.0125 B3 | 94 | 49 | 24 | 3 |
| 0.25 B3 | 31 | **7** **(FIC 0.75)** | **3** **(FIC 1)** | 2 |
| **0.5 B3** | 1 | 2 | 1 | 2 |

| % MIC of A alone | % MIC of B3 alone | MIC of each compound as a mixture | | FIC Index | |
|---|---|---|---|---|---|
| | | A % | B3 % | | |
| 0.25 | 0.5 | 0.0625 | 0.25 | 0.75 | Ratio A/B3 = 0.25 |

The results obtained show synergistic inhibitory activity for the mixtures:

i) 0.0625% of A and 0.25% of B3, i.e. ratio A/B3 = 0.25

ii) 0.125% of A and 0.25% of B3, i.e. ratio A/B3 = 0.5

Enteroccoccus faecalis

| concentrations tested (in weight %) | 0 A | 0.0625 A | 0.125 A | 0.25 A | 0.5 A | **1 A** |
|---|---|---|---|---|---|---|
| 0 B3 | | 78 | 86 | 92 | 72 | 4 |
| 0.25 B3 | 77 | 76 | 79 | 59 | 45 | 6 |
| 0.5 B3 | 30 | **6** **(FIC 0.56)** | **3** **(FIC 0.63)** | **2** **(FIC 0.75)** | **3** **(FIC 1)** | 21 |
| **1 B3** | 3 | 5 | 2 | 4 | 3 | -2 |

| % MIC of A alone | % MIC of B3 alone | MIC of each compound as a mixture | | FIC Index | |
|---|---|---|---|---|---|
| | | A % | B3 % | | |
| 1 | 1 | 0.0625 | 0.5 | 0.56 | Ratio A/B3 = 0.125 |

The results obtained show synergistic inhibitory activity for the mixture:

i) 0.0625% of A and 0.5% of B3, i.e. ratio A/B3 = 0.125

ii) 0.125% of A and 0.5% of B3, i.e. ratio A/B3 = 0.25

iii) 0.25% of A and 0.5% of B3, i.e. ratio A/B3 = 0.5

iv) 0.5% of A and 0.5% of B3, i.e. ratio A/B3 = 1

**Example 6: Determination of the synergistic antimicrobial activity as MIC**

The demonstration of a synergistic antimicrobial activity effect with a mixture of 4-(3-ethoxy-4-hydroxyphenyl)butan-2-one (referred to as substance A) and of 4-isopropyl-3-methylphenol (referred to as substance B4) is performed according to the method described in Example 1.
The following results were obtained:

***Candida Albicans***

| **Concentrations tested (in weight %)** | 0 de A | 0.025 A | 0.05 A | 0.1 A | **0.2 A** |
|---|---|---|---|---|---|
| 0 of B4 | | 69 | 63 | 38 | 4 |
| 0.0025 B4 | 87 | 77 | 63 | 41 | 6 |
| 0.005 B4 | 82 | 58 | 54 | 28 | 2 |
| 0.01 B4 | 73 | 52 | 41 | **18 (FIC 0.75)** | 2 |
| 0.02 B4 | 35 | **18 (FIC 0.63)** | **8 (FIC 0.75)** | **3 (FIC 1)** | 1 |
| **0.04 B4** | 1 | 1 | 1 | 1 | 0 |

| % MIC of A alone | % MIC of B4 alone | MIC of each compound as a mixture | | FIC Index | Ratio A/B4 |
|---|---|---|---|---|---|
| | | A % | B4 % | | |
| 0.2 | 0.04 | 0.025 | 0.2 | 0.63 | 1.25 |

The results obtained show synergistic inhibitory activity for the mixtures:

i) 0.025% of A and 0.02% of B4, i.e. ratio A/B4 = 1.25

ii) 0.05% of A and 0.02% of B4, i.e. ratio A/B4 = 2.5

iii) 0.1% of A and 0.02% of B4, i.e. ratio A/B4 = 5

iv) 0.1% of A and 0.01% of B4, i.e. ratio A/B4 = 10

***Enterococcus Faecalis***

| **Concentrations tested (in weight %)** | 0 of A | 0.0625 A | 0.125 A | 0.25 A | 0.5 A | **1 A** |
|---|---|---|---|---|---|---|
| 0 of B4 | | 42 | 42 | 33 | 34 | 24 |
| 0.0125 B4 | 45 | 41 | 41 | 37 | 40 | 21 |
| 0.025 B4 | 44 | 36 | 38 | 30 | 36 | -19 |
| 0.05 B4 | 27 | 39 | **12 (FIC 0.625)** | **11 (FIC 0.75)** | **11 (FIC 1)** | -27 |
| **0.1 B4** | 23 | -18 | 7 | 8 | -4 | -90 |

| % MIC of A alone | % MIC of B4 alone | MIC of each compound as a mixture | | FIC Index | Ratio A/B4 |
|---|---|---|---|---|---|
| | | A % | B4 % | | |
| 1 | 0.1 | 0.125 | 0.05 | 0.63 | 1.25 |

The results obtained show synergistic inhibitory activity for the mixtures:

i) 0.125% of A and 0.05% of B4, i.e. ratio A/B4 = 1.25

ii) 0.25% of A and 0.05% of B4, i.e. ratio A/B4 = 2.5
iii) 0.5% of A and 0.05% of B4, i.e. ratio A/B4 = 10

## Claims

1. Antimicrobial mixture comprising 4-(3-ethoxy-4-hydroxyphenyl)butan-2-one and an aromatic alcohol chosen from:

   i) a phenoxyalcohol of formula $C_6H_5$-O-R-OH, R denoting a divalent hydrocarbon-based radical having 2 or 3 carbon atoms;
   ii) phenylethyl alcohol;
   ii) benzyl alcohol;
   iv) a cresol compound of formula (I):

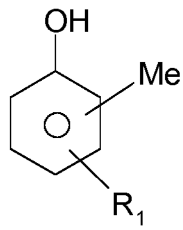

(I)

   in which $R_1$ denotes H or an isopropyl radical.

2. Mixture according to Claim 1, **characterized in that** the aromatic alcohol is a phenoxyalcohol of formula $C_6H_5$-O-R-OH, R denoting a divalent hydrocarbon-based radical having 2 or 3 carbon atoms.

3. Mixture according to the preceding claim, **characterized in that** said phenoxyalcohol is chosen from 2-phenoxyethanol or 1-phenoxy-2-propanol.

4. Antimicrobial mixture according to either of Claims 2 and 3, **characterized in that** said phenoxyalcohol is 2-phenoxyethanol.

5. Mixture according to one of Claims 2 to 4, **characterized in that** it comprises 4-(3-ethoxy-4-hydroxyphenyl)butan-2-one and phenoxyalcohol in amounts such that the 4-(3-ethoxy-4-hydroxyphenyl)butan-2-one/2-phenoxyalcohol weight ratio ranges from 0.15 to 3.5, preferably ranges from 0.15 to 3.2, and more preferentially ranges from 0.2 to 3.2.

6. Antimicrobial mixture according to one of Claims 2 to 4, **characterized in that** it has a 4-(3-ethoxy-4-hydroxyphenyl)butan-2-one/phenoxyalcohol weight ratio ranging from 0.3 to 3.2, preferably ranging from 0.3 to 2.4, preferentially ranging from 0.3 to 1.4, and more preferentially ranging from 0.3 to 1.2.

7. Antimicrobial mixture according to one of Claims 2 to 4, **characterized in that** it has a 4-(3-ethoxy-4-hydroxyphenyl)butan-2-one/phenoxyalcohol weight ratio ranging from 0.4 to 0.8, preferably ranging from 0.45 to 0.7, and more preferentially ranging from 0.45 to 0.6.

8. Antimicrobial mixture according to one of Claims 2 to 4, **characterized in that** it has a 4-(3-ethoxy-4-hydroxyphenyl)butan-2-one/phenoxyalcohol weight ratio ranging from 0.15 to 1.3, preferably ranging from 0.15 to 0.7, and more preferentially ranging from 0.25 to 0.5.

9. Antimicrobial mixture according to one of Claims 2 to 4, **characterized in that** it has a 4-(3-ethoxy-4-hydroxyphenyl)butan-2-one/phenoxyalcohol weight ratio ranging from 0.6 to 1.6, preferably ranging from 0.7 to 1.4, preferentially ranging from 0.8 to 1.2, and more preferentially ranging from 0.9 to 1.1.

10. Antimicrobial mixture according to one of Claims 1 to 3, **characterized in that** it has a 4-(3-ethoxy-4-hydroxyphenyl)butan-2-one/phenoxyalcohol weight ratio ranging from 0.2 to 3.2, preferably ranging from 0.4 to 3.2, preferably ranging from 0.8 to 3.2, preferably ranging from 1.6 to 3.2, preferably ranging from 0.2 to 2.4, preferably ranging from 0.4 to 2.4, preferentially ranging from 0.8 to 2.4, and more preferentially ranging from 1.6 to 2.4.

**11.** Antimicrobial mixture as claimed in Claim 1, **characterized in that** the aromatic alcohol is phenylethyl alcohol.

**12.** Antimicrobial mixture according to the preceding claim, **characterized in that** it comprises 4-(3-ethoxy-4-hydroxyphenyl)butan-2-one and phenylethyl alcohol in amounts such that the 4-(3-ethoxy-4-hydroxyphenyl)butan-2-one/phenylethyl alcohol weight ratio ranges from 0.05 to 1, preferably ranges from 0.09 to 0.9, and preferentially ranges from 0.3 to 0.85.

**13.** Antimicrobial mixture as claimed in Claim 1, **characterized in that** the aromatic alcohol is benzyl alcohol.

**14.** Antimicrobial mixture according to the preceding claim, **characterized in that** it comprises 4-(3-ethoxy-4-hydroxyphenyl)butan-2-one and benzyl alcohol in amounts such that the 4-(3-ethoxy-4-hydroxyphenyl)butan-2-one/benzyl alcohol weight ratio ranges from 0.1 to 1.5, and preferably ranges from 0.1 to 1.2.

**15.** Antimicrobial mixture as claimed in Claim 1, **characterized in that** the aromatic alcohol is a cresol compound of formula (I):

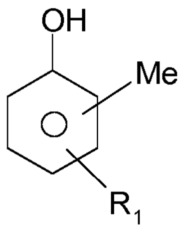

(I)

in which $R_1$ denotes H or an isopropyl radical.

**16.** Antimicrobial mixture according to the preceding claim, in which the cresol compound of formula (I) is chosen from 2-methylphenol, 3-methylphenol, 4-methylphenol, and 4-isopropyl-3-methylphenol.

**17.** Antimicrobial mixture according to either of Claims 15 and 16, in which the cresol compound of formula (I) is 4-isopropyl-3-methylphenol.

**18.** Antimicrobial mixture according to one of Claims 15 to 17, **characterized in that** it comprises 4-(3-ethoxy-4-hydroxyphenyl)butan-2-one and the cresol compound (I) in amounts such that the 4-(3-ethoxy-4-hydroxyphenyl)butan-2-one/cresol compound (I) weight ratio ranges from 0.5 to 15, preferably ranges from 1 to 15, and more preferentially ranges from 1 to 12.

**19.** Antimicrobial mixture according to one of Claims 15 to 17, **characterized in that** it has a 4-(3-ethoxy-4-hydroxyphenyl)butan-2-one/cresol compound (I) weight ratio ranging from 2 to 15, preferably ranging from 2.2 to 15, and more preferentially ranging from 2.2 to 12.

**20.** Composition comprising, in a physiologically acceptable medium, an antimicrobial mixture according to one of Claims 1 to 19.

**21.** Composition according to the preceding claim, **characterized in that** it comprises at least one additional ingredient chosen from water, oils, polyols containing from 2 to 10 carbon atoms, gelling agents, surfactants, film-forming polymers, colorants, fragrances, fillers, UV-screening agents, plant extracts, cosmetic and dermatological active agents, and salts.

**22.** Composition according to either of Claims 20 and 21, **characterized in that** the 4-(3-ethoxy-4-hydroxyphenyl)butan-2-one is present in a content ranging from 0.01% to 5% by weight relative to the total weight of the composition, preferably ranging from 0.01% to 3% by weight, preferentially ranging from 0.01% to 2.5% by weight, and more preferentially ranging from 0.01% to 2% by weight.

**23.** Non-therapeutic cosmetic treatment process for caring for and/or making up and/or cleansing keratin materials, comprising the application to said keratin materials of a composition according to any one of Claims 20 to 22.

**24.** Process for conserving a composition comprising a physiologically acceptable medium, in particular a cosmetic or dermatological composition, **characterized in that** it consists in incorporating into said composition an antimicrobial mixture as defined in one of Claims 1 to 19.

## Patentansprüche

**1.** Antimikrobielle Mischung, umfassend 4-(3-Ethoxy-4-hydroxyphenyl)butan-2-on und einen aromatischen Alkohol, der ausgewählt ist aus:

i) einem Phenoxyalkohol der Formel $C_6H_5$-O-R-OH, wobei R für einen zweiwertigen Rest auf Kohlenwasserstoffbasis mit 2 oder 3 Kohlenstoffatomen steht;
ii) Phenylethylalkohol;
ii) Benzylalkohol;
iv) eine Kresolverbindung der Formel (I):

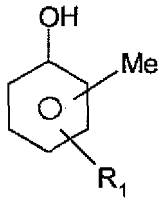

(I)

in der $R_1$ für Wasserstoff oder einen Isopropylrest steht.

**2.** Mischung nach Anspruch 1, **dadurch gekennzeichnet, dass** es sich bei dem aromatischen Alkohol um einen Phenoxyalkohol der Formel $C_6H_5$-O-R-OH handelt, wobei R für einen zweiwertigen Rest auf Kohlenwasserstoffbasis mit 2 oder 3 Kohlenstoffatomen steht.

**3.** Mischung nach dem vorhergehenden Anspruch, **dadurch gekennzeichnet, dass** der Phenoxyalkohol aus 2-Phenoxyethanol oder 1-Phenoxy-2-propanol ausgewählt ist.

**4.** Antimikrobielle Mischung nach einem der Ansprüche 2 und 3, **dadurch gekennzeichnet, dass** es sich bei dem Phenoxyalkohol um 2-Phenoxyethanol handelt.

**5.** Mischung nach einem der Ansprüche 2 bis 4, **dadurch gekennzeichnet, dass** sie 4- (3-Ethoxy-4-hydroxyphenyl)-butan-2-on und Phenoxyalkohol in solchen Mengen umfasst, dass das Gewichtsverhältnis von 4-(3-Ethoxy-4-hydroxyphenyl)butan-2-on zu 2-Phenoxyalkohol im Bereich von 0,15 bis 3,5, vorzugsweise im Bereich von 0,1 bis 3,2 und weiter bevorzugt im Bereich von 0,2 bis 3,2 liegt.

**6.** Antimikrobielle Mischung nach einem der Ansprüche 2 bis 4, **dadurch gekennzeichnet, dass** sie ein Gewichtsverhältnis von 4-(3-Ethoxy-4-hydroxyphenyl)-butan-2-on zu Phenoxyalkohol im Bereich von 0,3 bis 3,2, vorzugsweise im Bereich von 0,3 bis 2,4, bevorzugt im Bereich von 0,3 bis 1,4 und weiter bevorzugt im Bereich von 0,3 bis 1,2 liegt.

**7.** Antimikrobielle Mischung nach einem der Ansprüche 2 bis 4, **dadurch gekennzeichnet, dass** sie ein Gewichtsverhältnis von 4-(3-Ethoxy-4-hydroxyphenyl)-butan-2-on zu Phenoxyalkohol im Bereich von 0,4 bis 0,8, vorzugsweise im Bereich von 0,45 bis 0,7 und weiter bevorzugt im Bereich von 0,45 bis 0,6 aufweist.

**8.** Antimikrobielle Mischung nach einem der Ansprüche 2 bis 4, **dadurch gekennzeichnet, dass** sie ein Gewichtsverhältnis von 4-(3-Ethoxy-4-hydroxyphenyl)-butan-2-on zu Phenoxyalkohol im Bereich von 0,15 bis 1,3, vorzugsweise im Bereich von 0,15 bis 0,7 und weiter bevorzugt im Bereich von 0,25 bis 0,5 aufweist.

**9.** Antimikrobielle Mischung nach einem der Ansprüche 2 bis 4, **dadurch gekennzeichnet, dass** sie ein Gewichtsverhältnis von 4-(3-Ethoxy-4-hydroxyphenyl)-butan-2-on zu Phenoxyalkohol im Bereich von 0,6 bis 1,6, vorzugsweise im Bereich von 0,7 bis 1,4, bevorzugt im Bereich von 0,8 bis 1,2 und weiter bevorzugt im Bereich von 0,9 bis 1,1 aufweist.

**10.** Antimikrobielle Mischung nach einem der Ansprüche 1 bis 3, **dadurch gekennzeichnet, dass** sie ein Gewichtsverhältnis von 4-(3-Ethoxy-4-hydroxyphenyl)-butan-2-on zu Phenoxyalkohol im Bereich von 0,2 bis 3,2, vorzugsweise im Bereich von 0,4 bis 3,2, vorzugsweise im Bereich von 0,8 bis 3,2, vorzugsweise im Bereich von 1,6 bis 3,2, vorzugsweise im Bereich von 0,2 bis 2,4, vorzugsweise im Bereich von 0,4 bis 2,4, bevorzugt im Bereich von 0,8 bis 2,4 und weiter bevorzugt im Bereich von 1,6 bis 2,4 aufweist.

**11.** Antimikrobielle Mischung nach Anspruch 1, **dadurch gekennzeichnet, dass** es sich bei dem aromatischen Alkohol um Phenylethylalkohol handelt.

**12.** Antimikrobielle Mischung nach dem vorhergehenden Anspruch, **dadurch gekennzeichnet, dass** sie 4-(3-Ethoxy-4-hydroxyphenyl)butan-2-on und Phenylethylalkohol in solchen Mengen umfasst, dass das Gewichtsverhältnis von 4-(3-Ethoxy-4-hydroxyphenyl)butan-2-on zu Phenylethylalkohol im Bereich von 0,05 bis 1, vorzugsweise im Bereich von 0,09 bis 0,9 und bevorzugt im Bereich von 0,3 bis 0,85 liegt.

**13.** Antimikrobielle Mischung nach Anspruch 1, **dadurch gekennzeichnet, dass** es sich bei dem aromatischen Alkohol um Benzylalkohol handelt.

**14.** Antimikrobielle Mischung nach dem vorhergehenden Anspruch, **dadurch gekennzeichnet, dass** sie 4-(3-Ethoxy-4-hydroxyphenyl)butan-2-on und Benzylalkohol in solchen Mengen umfasst, dass das Gewichtsverhältnis von 4-(3-Ethoxy-4-hydroxyphenyl)butan-2-on zu Benzylalkohol im Bereich von 0,1 bis 1,5 und vorzugsweise im Bereich von 0,1 bis 1,2 liegt.

**15.** Antimikrobielle Mischung nach Anspruch 1, **dadurch gekennzeichnet, dass** es sich bei dem aromatischen Alkohol um eine Kresolverbindung der Formel (I):

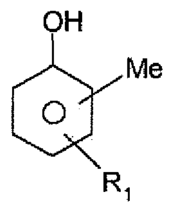

(I)

in der $R_1$ für Wasserstoff oder einen Isopropylrest steht, handelt.

**16.** Antimikrobielle Mischung nach dem vorhergehenden Anspruch, wobei die Kresolverbindung der Formel (I) aus 2-Methylphenol, 3-Methylphenol, 4-Methylphenol und 4-Isopropyl-3-methylphenol ausgewählt ist.

**17.** Antimikrobielle Mischung nach einem der Ansprüche 15 und 16, wobei es sich bei der Kresolverbindung der Formel (I) um 4-Isopropyl-3-methylphenol handelt.

**18.** Antimikrobielle Mischung nach einem der Ansprüche 15 bis 17, **dadurch gekennzeichnet, dass** sie 4-(3-Ethoxy-4-hydroxyphenyl)butan-2-on und die Kresolverbindung (I) in solchen Mengen umfasst, dass das Gewichtsverhältnis von 4-(3-Ethoxy-4-hydroxyphenyl)-butan-2-on zu Kresolverbindung (I) im Bereich von 0,5 bis 15, vorzugsweise im Bereich von 1 bis 15 und weiter bevorzugt im Bereich von 1 bis 12 liegt.

**19.** Antimikrobielle Mischung nach einem der Ansprüche 15 bis 17, **dadurch gekennzeichnet, dass** sie ein Gewichtsverhältnis von 4-(3-Ethoxy-4-hydroxyphenyl)-butan-2-on zu Kresolverbindung (I) im Bereich von 2 bis 15, vorzugsweise im Bereich von 2,2 bis 15 und weiter bevorzugt im Bereich von 2,2 bis 12 aufweist.

**20.** Zusammensetzung, die in einem physiologisch unbedenklichen Medium eine antimikrobielle Mischung nach einem der Ansprüche 1 bis 19 umfasst.

**21.** Zusammensetzung nach dem vorhergehenden Anspruch, **dadurch gekennzeichnet, dass** sie mindestens einen zusätzlichen Inhaltsstoff umfasst, der aus Wasser, Ölen, Polyolen mit 2 bis 10 Kohlenstoffatomen, Geliermitteln, Tensiden, filmbildenden Polymeren, Farbmitteln, Duftstoffen, Füllstoffen, UV-Filtersubstanzen, Pflanzenextrakten, kosmetischen und dermatologischen Wirkstoffen und Salzen ausgewählt ist.

**22.** Zusammensetzung nach einem der Ansprüche 20 und 21, **dadurch gekennzeichnet, dass** das 4-(3-Ethoxy-4-hydroxyphenyl)butan-2-on in einem Gehalt im Bereich von 0,01 bis 5 Gew.-%, bezogen auf das Gesamtgewicht der Zusammensetzung, vorzugsweise im Bereich von 0,01 bis 3 Gew.-%, bevorzugt im Bereich von 0,01 bis 2,5 Gew.-% und weiter bevorzugt im Bereich von 0,01 bis 2 Gew.-% vorliegt.

**23.** Nichttherapeutisches kosmetisches Behandlungsverfahren zum Pflegen und/oder Schminken und/oder Reinigen von Keratinmaterialien, bei dem man auf die Keratinfasern eine Zusammensetzung nach einem der Ansprüche 20 bis 22 aufbringt.

**24.** Verfahren zur Konservierung einer Zusammensetzung, die ein physiologisch unbedenkliches Medium umfasst, insbesondere einer kosmetischen oder dermatologischen Zusammensetzung, **dadurch gekennzeichnet, dass** es darin besteht, dass man in die Zusammensetzung eine antimikrobielle Mischung gemäß einem der Ansprüche 1 bis 19 einarbeitet.

## Revendications

**1.** Mélange antimicrobien comprenant de la 4-(3-éthoxy-4-hydroxyphényl)butan-2-one et un alcool aromatique choisi parmi :

i) un phénoxyalcool de formule $C_6H_5$-O-R-OH, R désignant un radical divalent à base d'hydrocarbure possédant 2 ou 3 atomes de carbone ;
ii) de l'alcool phényléthylique ;
ii) de l'alcool benzylique ;
iv) un composé de type crésol de formule (I) :

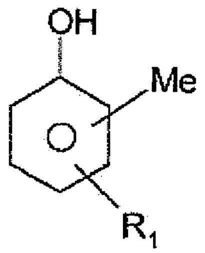

(I)

dans laquelle $R_1$ désigne H ou un radical isopropyle.

**2.** Mélange selon la revendication 1, **caractérisé en ce que** l'alcool aromatique est un phénoxyalcool de formule $C_6H_5$-O-R-OH, R désignant un radical divalent à base d'hydrocarbure possédant 2 ou 3 atomes de carbone.

**3.** Mélange selon la revendication précédente, **caractérisé en ce que** ledit phénoxyalcool est choisi parmi le 2-phénoxyéthanol et le 1-phénoxy-2-propanol.

**4.** Mélange antimicrobien selon l'une ou l'autre des revendications 2 et 3, **caractérisé en ce que** ledit phénoxyalcool est le 2-phénoxyéthanol.

**5.** Mélange selon l'une des revendications 2 à 4, **caractérisé en ce qu'**il comprend de la 4-(3-éthoxy-4-hydroxyphényl)butan-2-one et un phénoxyalcool en des quantités telles que le rapport en poids de 4-(3-éthoxy-4-hydroxyphényl)butan-2-one/2-phénoxyalcool se situe dans la plage de 0,15 à 3,5, préférablement dans la plage de 0,15 à 3,2, et plus préférentiellement dans la plage de 0,2 à 3,2.

**6.** Mélange antimicrobien selon l'une des revendications 2 à 4, **caractérisé en ce qu'**il possède un rapport en poids de 4-(3-éthoxy-4-hydroxyphényl)butan-2-one/phénoxyalcool dans la plage de 0,3 à 3,2, préférablement dans la plage de 0,3 à 2,4, préférentiellement dans la plage de 0,3 à 1,4, et plus préférentiellement dans la plage de 0,3 à 1,2.

**7.** Mélange antimicrobien selon l'une des revendications 2 à 4, **caractérisé en ce qu'**il possède un rapport en poids de 4-(3-éthoxy-4-hydroxyphényl)butan-2-one/phénoxyalcool dans la plage de 0,4 à 0,8, préférablement dans la plage de 0,45 à 0,7, et plus préférentiellement dans la plage de 0,45 à 0,6.

**8.** Mélange antimicrobien selon l'une des revendications 2 à 4, **caractérisé en ce qu'**il possède un rapport en poids de 4-(3-éthoxy-4-hydroxyphényl)butan-2-one/phénoxyalcool dans la plage de 0,15 à 1,3, préférablement dans la plage de 0,15 à 0,7, et plus préférentiellement dans la plage de 0,25 à 0,5.

**9.** Mélange antimicrobien selon l'une des revendications 2 à 4, **caractérisé en ce qu'**il possède un rapport en poids de 4-(3-éthoxy-4-hydroxyphényl)butan-2-one/phénoxyalcool dans la plage de 0,6 à 1,6, préférablement dans la plage de 0,7 à 1,4, préférentiellement dans la plage de 0,8 à 1,2, et plus préférentiellement dans la plage de 0,9 à 1,1.

**10.** Mélange antimicrobien selon l'une des revendications 1 à 3, **caractérisé en ce qu'**il possède un rapport en poids de 4-(3-éthoxy-4-hydroxyphényl)butan-2-one/phénoxyalcool dans la plage de 0,2 à 3,2, préférablement dans la plage de 0,4 à 3,2, préférablement dans la plage de 0,8 à 3,2, préférablement dans la plage de 1,6 à 3,2, préférablement dans la plage de 0,2 à 2,4, préférablement dans la plage de 0,4 à 2,4, préférentiellement dans la plage de 0,8 à 2,4, et plus préférentiellement dans la plage de 1,6 à 2,4.

**11.** Mélange antimicrobien selon la revendication 1, **caractérisé en ce que** l'alcool aromatique est l'alcool phényléthylique.

**12.** Mélange antimicrobien selon la revendication précédente, **caractérisé en ce qu'**il comprend de la 4-(3-éthoxy-4-hydroxyphényl)butan-2-one et de l'alcool phényléthylique en des quantités telles que le rapport en poids de 4-(3-éthoxy-4-hydroxyphényl)butan-2-one/alcool phényléthylique se situe dans la plage de 0,05 à 1, préférablement dans la plage de 0,09 à 0,9, et préférentiellement dans la plage de 0,3 à 0,85.

**13.** Mélange antimicrobien selon la revendication 1, **caractérisé en ce que** l'alcool aromatique est l'alcool benzylique.

**14.** Mélange antimicrobien selon la revendication précédente, **caractérisé en ce qu'**il comprend de la 4-(3-éthoxy-4-hydroxyphényl)butan-2-one et de l'alcool benzylique en des quantités telles que le rapport en poids de 4-(3-éthoxy-4-hydroxyphényl)butan-2-one/alcool benzylique se situe dans la plage de 0,1 à 1,5, et préférablement dans la plage de 0,1 à 1,2.

**15.** Mélange antimicrobien selon la revendication 1, **caractérisé en ce que** l'alcool aromatique est composé de type crésol de formule (I) :

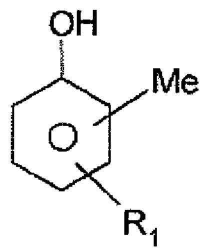

**(I)**

dans laquelle $R_1$ désigne H ou un radical isopropyle.

**16.** Mélange antimicrobien selon la revendication précédente, dans lequel le composé de type crésol de formule (I) est choisi parmi le 2-méthylphénol, le 3-méthylphénol, le 4-méthylphénol, et le 4-isopropyl-3-méthylphénol.

**17.** Mélange antimicrobien selon l'une ou l'autre des revendications 15 et 16, dans lequel le composé de type crésol de formule (I) est le 4-isopropyl-3-méthylphénol.

**18.** Mélange antimicrobien selon l'une des revendications 15 à 17, **caractérisé en ce qu'**il comprend de la 4-(3-éthoxy-4-hydroxyphényl)butan-2-one et le composé de type crésol (I) en des quantités telles que le rapport en poids de 4-(3-éthoxy-4-hydroxyphényl)butan-2-one/composé de type crésol (I) se situe dans la plage de 0,5 à 15, préférablement dans la plage de 1 à 15, et plus préférentiellement dans la plage de 1 à 12.

**19.** Mélange antimicrobien selon l'une des revendications 15 à 17, **caractérisé en ce qu'**il possède un rapport en poids de 4-(3-éthoxy-4-hydroxyphényl)butan-2-one/composé de type crésol (I) dans la plage de 2 à 15, préférablement dans la plage de 2,2 à 15, et plus préférentiellement dans la plage de 2,2 à 12.

**20.** Composition comprenant, dans un milieu physiologiquement acceptable, un mélange antimicrobien selon l'une des revendications 1 à 19.

**21.** Composition selon la revendication précédente, **caractérisée en ce qu'**elle comprend au moins un ingrédient supplémentaire choisi parmi l'eau, des huiles, des polyols contenant de 2 à 10 atomes de carbone, des agents gélifiants, des tensioactifs, des polymères filmogènes, des colorants, des fragrances, des charges, des agents anti-UV, des extraits végétaux, des agents actifs cosmétiques et dermatologiques, et des sels.

**22.** Composition selon l'une ou l'autre des revendications 20 et 21, **caractérisée en ce que** la 4-(3-éthoxy-4-hydroxyphényl)butan-2-one est présente en une teneur dans la plage de 0,01 % à 5 % en poids par rapport au poids total de la composition, préférablement dans la plage de 0,01 % à 3 % en poids, préférentiellement dans la plage de 0,01 % à 2,5 % en poids, et plus préférentiellement dans la plage de 0,01 % à 2 % en poids.

**23.** Procédé de traitement cosmétique non thérapeutique pour l'entretien et/ou pour le maquillage et/ou pour le nettoyage de matières kératiniques, comprenant l'application auxdites matières kératiniques d'une composition selon l'une quelconque des revendications 20 à 22.

**24.** Procédé pour la conservation d'une composition comprenant un milieu physiologiquement acceptable, en particulier d'une composition cosmétique ou dermatologique, **caractérisé en ce qu'**il consiste en l'incorporation dans ladite composition d'un mélange antimicrobien tel que défini dans l'une des revendications 1 à 19.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011039445 A
- FR 2962333 A


### Non-patent literature cited in the description


- **F.C. KULL ; P.C. EISMAN ; H.D. SYLWESTROWKA ; R.L. MAYER.** *Applied Microbiology,* 1961, vol. 9, 538-541